# EUROPEAN PATENT APPLICATION

(11) **EP 3 567 000 A1**
(43) Date of publication of application: **13.11.2019**
(21) Application number: 18171533.5
(22) Date of filing: 09.05.2018
(51) Int. Cl.: B66D 5/30, B66D 5/14, F16D 59/02, F16D 65/18, F16D 121/22

(54) **ELEVATOR BRAKE ASSEMBLY**

(71) Applicant: Otis Elevator Company, Farmington, Connecticut 06032 (US)
(72) Inventor: de Diego Restrepo, Borja, 28919 Madrid (ES)
(74) Representative: Schmitt-Nilson Schraud Waibel Wohlfrom Patentanwälte Partnerschaft mbB

(57) **Abstract**

An elevator brake assembly (22) for braking a moving element (28) of an elevator system (2) comprises a first brake (32a) and a second brake (32b). The first and second brakes (32a, 32b) are configured for braking the same moving element (28). The second brake (32b) is configured for acting onto the first brake (32a) for increasing the braking force provided by the first brake (32a). One of the brakes (32a, 32b) is a fast brake which is configured for engaging faster than the other brake, which is configured as a slow brake, when the brakes (32a, 32b) are activated.

## Description

The invention relates to an elevator brake assembly and to an elevator system comprising such an elevator brake assembly.

Elevator systems typically comprise at least one elevator car moving along a hoistway extending between a plurality of landings. Elevator systems further comprise a driving member configured for driving the elevator car and brakes configured for braking the elevator car. In order to ensure safe operation, elevator systems in particular comprise at least one brake configured for braking the movement of the elevator car, in particular in an emergency situation, e.g. when the movement of the elevator car exceeds a predetermined velocity or acceleration. In order to provide the desired safety, elevator brakes are usually configured for providing large braking forces.

Applying large braking forces fast, however, results in a fast deceleration of the elevator car. This might be uncomfortable for passengers within the elevator car. Large braking forces further may cause injury of the passengers and/or damage of components of the elevator system.

It therefore would be beneficial to provide an improved elevator brake assembly allowing for a softer deceleration of the elevator car without compromising the safety of the elevator system.

According to an exemplary embodiment of the invention, an elevator brake assembly configured for braking a moving element in an elevator system comprises a first brake and a second brake. The first brake and the second brake are configured for braking the same moving element, such as a rotating shaft employed for driving the movement of an elevator car. The second brake is configured for acting onto the first brake for increasing the braking force provided by the first brake.

The actuation times, i.e. the time periods from being activated until applying the nominal braking force, of the first and second brakes are different. I.e. the first brake has a first actuation time between actuating the brake and applying the nominal braking force, and the second brake has a second actuation time between actuating the brake and applying the nominal braking force, wherein the second actuation time differs from the first actuation time.

In the following, the brake with the shorter actuation time is denoted as "fast brake", and the brake with the longer actuation time is denoted as "slow brake".

Exemplary embodiments of the invention also include an elevator system comprising an elevator brake assembly according to an exemplary embodiment of the invention.

In an elevator brake assembly according to an exemplary embodiment of the invention, the two brakes engage sequentially, i.e. the fast brake engages first and the slow brake engages after the fast brake.

Thus, at an early stage of the braking process, in which only the fast brake engages, only a fraction of the nominal braking force provided by the combination of both brakes is applied. Applying only a fraction of the nominal braking force results in a softer engagement of the brake assembly reducing the risk of discomfort and injury for passengers within the elevator car. It further reduces the risk of damaging components of the elevator system by applying large braking forces.

A number of optional features are set out in the following. These features may be realized in particular embodiments, alone or in combination with any of the other features, unless specified otherwise.

The first and second brakes may be electromagnetic brakes comprising an electric coil, respectively. Electromagnetic brakes are cheap, reliable and may be controlled easily.

The electric coil of the fast brake may have a smaller inductivity than the electric coil of the slow brake. When electric currents flowing through the coils are simultaneously interrupted, the electromagnetic field of a coil having a smaller inductivity breaks down faster than the electromagnetic field of a coil having a larger inductivity. Thus, providing the two brakes with electric coils having different inductivities provides an efficient way of providing an elevator brake assembly in which one of the brakes is as fast brake engaging faster than the slow brake when the brakes are simultaneously activated.

The electric coil of the fast brake may have fewer windings than the electric coil of the slow brake. Varying the number of windings is a convenient way of providing electric coils having different inductivities.

Additionally or alternatively, the kind and/or the amount of material used as a yoke of the respective coil may be varied. Generally, the inductivity will be higher when a material with a larger permeability is used for the yoke.

The elevator brake assembly may comprise a first brake disk torque-proofly coupled with the moving element and configured for engaging with the first brake, and a second brake disk torque-proofly coupled with the moving element and configured for engaging with the second brake. Brake disks provide convenient means for reliably braking the moving element, in particular when the moving element is a rotating element such as a rotating shaft.

The rotating shaft may be coupled with a sheave which is configured for supporting and driving a tension member on which an elevator car is suspended. In such a configuration, the movement of the elevator car may be braked by braking the rotation of the rotating shaft.

The first and second brakes may be arranged coaxially on said rotating shaft. Such a configuration allows for a compact, space-saving arrangement of the first and second brakes.

The first and second brakes may be arranged serially next to each other on the rotating shaft. Such a configuration allows one of the brakes to act onto the other brake for increasing the braking force applied by the brakes.

Each of the brakes may comprise a movable brake shoe which in particular is movable parallel to the axis of the rotating shaft. The brake shoes in particular may be configured for contacting the brake disks coupled with the rotating shaft for braking the rotation of the rotating shaft.

For enhancing the efficiency of the braking, the brake shoes may be provided with at least one braking surface, in particular at least one braking surface covered by a brake lining.

One of the brakes may be movable parallel to the axis of the rotating element and the other one of the brakes may be fixed so that it is not movable. The movable brake in particular may be arranged between the movable brake and a fixed support element which is not movable. Such a configuration allows the fixed brake to push the movable break against the support element for increasing the braking force which is applied by the movable brake to the moving/rotating element.

Each of the brakes may comprise at least one elastic element configured for urging the brake shoe in a braking position in which it brakes the moving element, e.g. by frictionally engaging with one of the brake disks. As a result, each brake is in a braking position in its idle state, i.e. in a state in which no control signal is supplied to the brake. A configuration in which each brake is in a braking position in the idle state enhances the safety of the elevator brake assembly / elevator system.

The brake shoe of each of the brakes may be configured to be moved into a released position, in which it does not brake the moving element, by an electric current flowing through an electric coil of the respective brake. This allows releasing (disengaging) the brake by supplying an electrical current to the brake.

In the following, exemplary embodiments of the invention are described in more detail with respect to the enclosed figures.
Figure 1 schematically depicts an elevator system according to an exemplary embodiment of the invention.
Figure 2 depicts a sectional view through an elevator brake assembly according to an exemplary embodiment of the invention.
Figure 3 depicts a perspective view of the elevator brake assembly depicted in Figure 2.

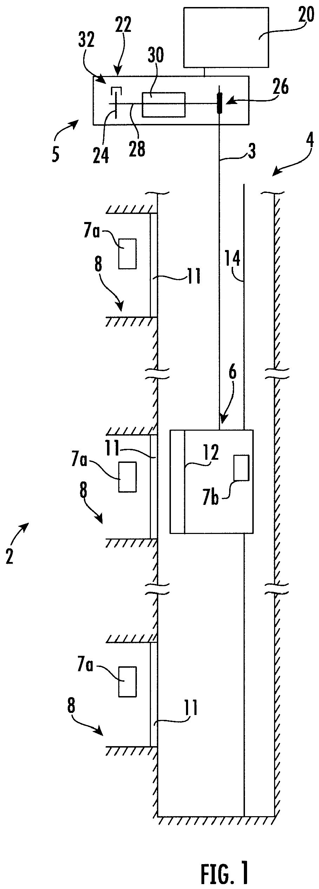

Figure 1 schematically depicts an elevator system 2 according to an exemplary embodiment of the invention.

The elevator system 2 includes an elevator car 6 movably arranged within a hoistway 4 extending between a plurality of landings 8. The elevator car 6 in particular may move along a plurality of guide rails 14 extending along the vertical direction of the hoistway 4. Only one of said guide rails 14 is visible in Figure 1. Although only one elevator car 6 is depicted in Figure 1, the skilled person will understand that exemplary embodiments of the invention may comprise elevator systems 2 comprising a plurality of elevator cars 6 moving in one or more hoistways 4.

The elevator car 6 is movably suspended by means of a tension member 3. The tension member 3, for example a rope or belt, is connected to a drive unit 5, which is configured for driving the tension member 3 in order to move the elevator car 6 along the height of the hoistway 4 between the plurality of landings 8, which are located on different floors.

The drive unit 5 in particular comprises a motor 30 and a sheave 26, which is mounted to a rotating shaft 28 driven by the motor 30. The tension member 3 extends over the outer periphery of the sheave 26 so that the elevator car 6 may be moved by rotating the sheave 26.

Each landing 8 is provided with a landing door 11, and the elevator car 6 is provided with a corresponding elevator car door 12 for allowing passengers to transfer between a landing 8 and the interior of the elevator car 6 when the elevator car 6 is positioned at the respective landing 8.

In the exemplary embodiment shown in Figure 1, a 1:1 roping is used for suspending the elevator car 6. The skilled person, however, easily understands that the type of the roping is not essential for the invention and that different kinds of roping, e.g. a 2:1 roping or a 4:1 roping may be used as well.

The elevator system 2 may use a counterweight (not shown) attached to the tension member 3 and moving concurrently and in opposite direction with respect to the elevator car 6. The invention also may be applied to elevator systems 2 which do not comprise a counterweight.

The elevator system 2 may have a machine room or may be a machine room-less elevator system 2. The tension member 3 may be a rope, e.g. a steel core, or a belt. The tension member 3 may be uncoated or may have a coating, e.g. in the form of a polymer jacket. In a particular embodiment, the tension member 3 may be a belt comprising a plurality of polymer coated steel cords (not shown).

The drive unit 5 is controlled by an elevator control unit 20 for moving the elevator car 6 along the hoistway 4 between the different landings 8.

Input to the control unit 20 may be provided via landing control panels 7a, which are provided on each landing 8 close to the landing doors 11, and/or via an elevator car control panel 7b, which is provided inside the elevator car 6.

The landing control panels 7a and the elevator car control panel 7b may be connected to the elevator control unit 20 by means of electrical lines, which are not shown in Fig. 1, in particular by an electric bus, or by means of wireless data connections.

The drive unit 5 is provided with at least one elevator brake assembly 22. The at least one elevator brake assembly 22 comprises at least one brake 32, which is configured for selectively engaging with at least one brake disk 24 mounted to the rotating shaft 28 of the motor 30 for braking, i.e. for stopping and/or holding, the elevator car 6.

In alternative embodiments, which are not depicted in the figures, the elevator brake assembly 22 may comprise at least one brake 32 which is configured for engaging with the sheave 26 and/or with the rotating shaft 28 of the motor 30, respectively. The elevator brake assembly 22 in particular may be configured for providing a holding brake, which is engaged every time the elevator car 6 has been stopped at one of the landings 8.

For safety reasons, the elevator brake assembly 22 may comprise a plurality of brakes 32, or a plurality of the elevator brake assemblies 22 may be employed.

In addition to the elevator brake assembly 22 depicted in Fig. 1, the elevator system 2 may be provided with a safety gear assembly (not shown), which is mounted to the elevator car 6 and configured for engaging with the guide rail 14 for stopping movement of the elevator car 6 in an emergency situation.

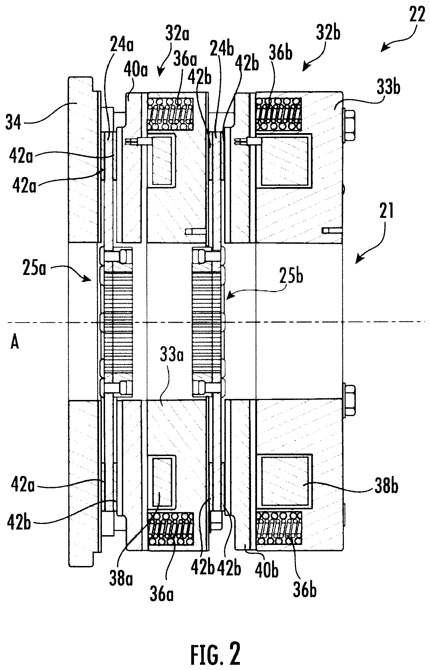

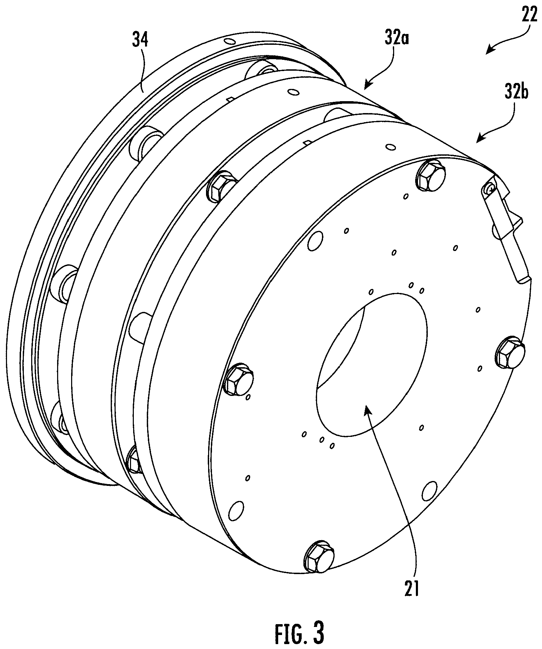

Figure 2 shows a sectional view through an elevator brake assembly 22 according to an exemplary embodiment of the invention; and Figure 3 shows a perspective view of said elevator brake assembly 22.

The elevator brake assembly 22 depicted in Figures 2 and 3 is a machine brake which is configured for acting on the rotating shaft 28 of the motor 30, as schematically illustrated in Figure 1.

The elevator brake assembly 22 basically has rotational symmetry around an axis A. A circular opening 21, which is configured for accommodating the rotating shaft 28, which is not shown in Figures 2 and 3, extends along said axis A through the elevator brake assembly 22.

The elevator brake assembly 22 comprises a support element 34. The support element 34 is fixed to a support structure (not shown) so that it is neither rotatable nor slidable.

Two brake disks 24a, 24b are provided next to the support element 34 along the axis A. In the orientation depicted in Figure 2, the brake disks 24a, 24b are arranged on the right side of the support element 34.

The two brake disks 24a, 24b are spaced apart from each other in the axial direction, and they are coupled to the rotating shaft 28 by means of torque-proof couplings 25a, 25b, e.g. spline couplings.

The torque-proof couplings 25a, 25b allow the brake disks 24a, 24b to slide along the rotating shaft 28 in the axial direction, but they are configured to prevent the brake disks 24a, 24b from rotating with respect to the rotating shaft 28. Thus, the brake disks 24a, 24b rotate integrally with the rotating shaft 28 so that the rotating shaft 28 may be braked by braking at least one of the brake disks 24a, 24b.

The elevator brake assembly 22 further comprises two brakes 32a, 32b coaxially arranged on the rotating shaft 28. The two brakes 32a, 32b are arranged serially behind each other along the axis A.

A first brake 32a is arranged between the two brake disks 24a, 24b, and a second brake 32b is arranged on the side of the second brake disk 24b facing away from the first brake 32a and the support element 34 (the right side in Figure 2). Thus, the second brake disk 24b is sandwiched between the first and second brakes 32a, 32b in the axial direction.

The first brake 32a is slideable along the rotating shaft 28 in the axial direction. The second brake 32b is fixed so that it is not slidable in the axial direction.

Each of the brakes 32a, 32b comprises a brake body 33a, 33b and a brake shoe 40a, 40b, respectively. The brake shoes 40a, 40b are movable in the axial direction with respect to the respective brake body 33a, 33b. Each brake 32a, 32b further comprises at least one elastic element 36a, 36b, such as a spiral spring, which is configured for pushing the brake shoe 40a, 40b away from the respective brake body 33a, 33b.

Each brake body 33a, 33b comprises at least one electric coil 38a, 38b. The brake bodies 33a, 33b are configured to act as magnetic yokes for the electric coils 38a, 38b. Electrical currents flowing through the electric coils 38a, 38b generate electromagnetic forces attracting the brake shoe 40a, 40b of the respective brake 32a, 32b.

When no electrical currents are flowing though the electric coils 38a, 38b, the brake shoes 40a, 40b are pushed against the brake disks 24a, 24b by the elastic elements 36a, 36b.

In particular, the first brake disk 24a is pushed by the brake shoe 40a of the first brake 32a (first brake shoe 40a) against the fixed support element 34. Friction between the support element 34, the first brake disk 24a, and the first brake shoe 40a brakes rotation of the first brake disk 24a around the axis A.

Further, the second brake disk 24b is pushed by the brake shoe 40b of the second brake 32b (second brake shoe 40b) against the brake body 33a of the first brake 32a (first brake body 33a). Friction between the first brake body 33a, the second brake disk 24b, and the second brake shoe 40b brakes rotation of the second brake disk 24b around the axis A.

Pushing the second brake disk 24b against the first brake body 33a also pushes the first brake body 33a further towards the first brake disk 24a. This increases the force applied by the first brake shoe 40a onto the first brake disk 24a resulting in an increased braking force acting onto the first brake disk 24a.

For enhancing the efficiency of the braking, brake linings 42a, 42b are applied to contact surfaces of the support element 34, the brake shoes 40a, 40b and to the face of the first brake body 33a facing the second brake disk 24b, respectively.

For releasing the brake assembly 22 in order to allow free rotation of the rotating shaft 28 around its axis A, an electrical current is caused to flow through the electric coils 38a, 38b. Flowing an electrical current through the electric coils 38a, 38b generates electromagnetic fields attracting the brake shoes 40a, 40b and releasing the brake shoes 40a, 40b against the forces of the elastic elements 36a, 36b from the brake disks 24a, 24b.

This allows the brake disks 24a, 24b and in consequence the rotating shaft 28, which is torque-proofly connected with the brake disks 24a, 24b, to rotate freely around the common axis A.

For applying the brakes 32a, 32b, i.e. for braking the rotating shaft 28, the electrical current flowing through the electric coils 38a, 38b is switched off. This results in a breakdown of the electromagnetic field. In consequence, the elastic elements 36a, 36b push the brake shoes 40a, 40b against the brake disks 24a, 24b, as it has been described before.

According to an embodiment of the invention, the electric coils 38a, 38b of the two brake bodies 33a, 33b are configured differently.

In the embodiment depicted in Figure 2, the coil 38b (second coil 38b) provided at the brake body 33b of the second brake 32b (second brake body 33b) is larger, i.e. it comprises more windings, than the coil 38a provided at the first brake body 33a (first coil 38a).

Thus, the inductivity of the second coil 38b is larger than the inductivity of the first coil 38a. In consequence, when electric currents flowing through the electric coils 38a, 38b are shut-off, the breakdown of the electromagnetic field generated by the second coil 38b takes more time than the breakdown of the electromagnetic field generated by the first coil 38a. As a result, the first brake shoe 40a moves earlier than the second brake shoe 40b, so that the two brakes 32a, 32b engage sequentially, i.e. the first brake 32a engages before the second brake 32b.

In consequence, in an early stage of the braking process in which only the first brake 32a engages, only a fraction of the maximum braking force which can be applied by the combination of both brakes 32a, 32b is applied, resulting in a soft engagement of the brake assembly 22.

A soft engagement of the brakes 32a, 32b reduces the discomfort and the risk of injury for passengers within the elevator car 6. It further reduces the risk of damaging components of the elevator system 2 due to (too) large braking forces.

In the embodiment depicted in Figure 2, the electric coil 38a of the first brake 32a is smaller (has a smaller inductivity) than the electric coil 38b of the first brake 32b. The skilled person, however, understands that in an alternative configuration, which is not explicitly depicted in the figures, the electric coil 38a of the first brake 32a may be larger (may have a larger inductivity) than the electric coil 38b of the first brake 32b.

As mentioned, the inductivity of the coils 38a, 38b may be set by adjusting the number of windings of each of the coils 38a, 38b. Alternatively or additionally, the inductivity of the coils 38a, 38b may be adjusted by varying the kind and/or the amount of material used for the brake bodies 33a, 33b acting as yokes of the coils 38a, 38b.

Further, although only two brakes 32a, 32b are depicted in Figures 2 and 3, the skilled person understands that more than two brakes 32a, 32b may be arranged sequentially on the rotating shaft 28. In such a configuration, a series of brakes 32a, 32b is delimited by a fixed support 34 on one side (the left side in Figures 2 and 3) and by a fixed brake 32b on the other side (the right side in Figures 2 and 3). Additional brakes arranged between the fixed support 34 and the fixed brake 32b are slidable along the rotating shaft 28 just like the first brake 32a depicted in Figures 2 and 3.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention shall not be limited to the particular embodiment disclosed, but that the invention includes all embodiments falling within the scope of the dependent claims.

### References

- 2: elevator system
- 3: tension member
- 4: hoistway
- 5: drive unit
- 6: elevator car
- 7a: landing control panel
- 7b: elevator car control panel
- 8: landing
- 11: landing door
- 12: elevator car door
- 14: guide rail
- 20: control unit
- 21: opening
- 22: brake assembly
- 24: brake disk
- 24a: first brake disk
- 24b: second brake disk
- 26: sheave
- 28: moving element / rotating shaft
- 25a, 25b: torque-proof couplings
- 32: brake
- 32a: first brake
- 32b: second brake
- 33a: first brake body
- 33b: second brake body
- 35: support element
- 36a, 36b: elastic elements
- 38a: first electric coil
- 38b: second electric coil
- 40a: first brake shoe
- 40b: second brake shoe
- 42a, 42b: brake linings

## Claims

1. Elevator brake assembly (22) for braking a moving element (28) of an elevator system (2), the elevator brake assembly (22) comprising:
a first brake (32a); and
a second brake (32b);
wherein the first and second brakes (32a, 32b) are configured for braking the same moving element (28);
wherein the second brake (32b) is configured for acting onto the first brake (32a) for increasing the braking force provided by the first brake (32a); and
wherein one of the brakes (32a, 32b) is a fast brake which is configured for engaging faster than the other brake, which is configured as a slow brake, when the brakes (32a, 32b) are activated.

2. Elevator brake assembly (22) according to claim 1, wherein the fast brake has a first actuation time between actuating and applying its nominal braking force, and the slow brake has a second actuation time between actuating and applying its nominal braking force, wherein the second actuation time is larger than the first actuation time.

3. Elevator brake assembly (22) according to claim 2, wherein the first and second brakes (32a, 32b) are electromagnetic brakes comprising electric coils (38a, 38b).

4. Elevator brake assembly (22) according to claim 3, wherein the electric coil (38a) of the fast brake has a smaller inductivity than the electric coil (38b) of the slow brake.

5. Elevator brake assembly (22) according to claim 3 or 4, wherein the electric coil (38a) of the fast brake has fewer windings than the electric coil (38b) of the slow brake.

6. Elevator brake assembly (22) according to any of the preceding claims, comprising a first brake disk (24a) torque-proofly coupled with the moving element (28) and configured for engaging with the first brake (32a); and a second brake disk (24b) torque-proofly coupled with the moving element (28) and configured for engaging with the second brake (32b).

7. Elevator brake assembly (22) according to any of the preceding claims, wherein the moving element (28) is a rotational shaft (28) configured for rotating around an axis (A).

8. Elevator brake assembly (22) according to claim 7, wherein the first and second brakes (32a, 32b) are arranged coaxially on said axis (A), wherein the first and second brakes (32a, 32b) in particular are arranged serially next to each other on said rotating shaft (28).

9. Elevator brake assembly (22) according to claim 7 or 8, wherein one of the first and second brakes (32a, 32b) is movable parallel to said axis (A) and the other one of the first and second brakes (32a, 32b) is not movable.

10. Elevator brake assembly (22) according to claim 9, wherein the movable brake (32a) is arranged between the non-movable brake (32b) and a non-movable support element (34).

11. Elevator brake assembly (22) according to any of claims 7 to 10, wherein each of the brakes (32a, 32b) comprises a brake shoe (40a, 40b) which is movable parallel to said axis (A).

12. Elevator brake assembly (22) according to claim 11, wherein each of the first and second brakes (32a, 32b) comprises at least one elastic element (36a, 36b) configured for urging the respective brake shoe (40a, 40b) into a braking position in which it brakes the moving element (28).

13. Elevator brake assembly (22) according to claim 11 or 12, wherein the brake shoe (40a, 40b) of each of the first and second brakes (32a, 32b) is configured to be moved into a released position, in which it does not brake the moving element (28), by flowing an electric current through the electric coil (38a, 38b) of the respective brake (32a, 32b).

14. Elevator system (2) comprising:
at least one elevator car (6) moving along a hoistway (4);
an elevator drive (5) for driving the elevator car (6); and
an elevator brake assembly (22) according to any of the preceding claims,
wherein the moving element (28) is a rotating shaft (28) of the elevator drive (5).

15. Elevator system according to claim 14, further comprising a tension member (3) extending over a sheave (26) coupled with the rotating shaft (28), wherein the at least one elevator car (6) is suspended on the tension member (3).
